# DEMANDE DE BREVET EUROPEEN

(11) **EP 4 254 625 A1**
(43) Date de publication de la demande: **04.10.2023**
(21) Numéro de dépôt: 22305415.6
(22) Date de dépôt: 31.03.2022
(51) Int. Cl.: H01M 50/209, H01M 50/249, H01M 50/502, H01M 50/591

(54) **BATTERIE ET PROCÉDÉ D ASSEMBLAGE ASSOCIÉ**

(71) Demandeur: Automotive Cells Company SE, 92300 Levallois Perret (FR)
(72) Inventeur: CHAUVEAU, Pierre, 33520 BRUGES (FR); MATHIEU, Alexandre, 33300 BORDEAUX (FR); QUEYRENS, Mathieu, 33910 SAINT-DENIS-DE-PILE (FR); MARATHE, Dimitri, 33140 VILLENAVE D'ORNON (FR)
(74) Mandataire: Lavoix

(57) **Abrégé**

L'invention concerne une batterie comprenant :
- un boîtier (12) définissant un logement,
- une pluralité d'ensembles (16) agencés dans le logement, chacun des ensembles (16) comprenant une pluralité de cellules électrochimiques et définissant une première extrémité latérale (38) et une deuxième extrémité latérale opposées l'une à l'autre selon la direction transversale,
- au moins un connecteur électrique (20) s'étendant transversalement entre un premier bord latéral (26) du boîtier (12) et la première extrémité latérale (38) d'au moins un des ensembles (16).

La batterie (10) comprend en outre au moins un capot (22) s'étendant selon la direction longitudinale (X) et disposé transversalement entre le premier bord latéral (26) du boîtier (12) et les premières extrémités latérales (38) des ensembles (16), le capot (22) délimitant au moins partiellement un logement de protection (24), le connecteur électrique (20) étant logé dans le logement de protection (24).

## Description

La présente invention concerne une batterie, en particulier pour un véhicule au moins partiellement alimenté par batterie électrique.

L'invention s'applique en particulier à la réalisation d'une batterie, notamment de véhicule électrique. On entend par « batterie » une pluralité de cellules électrochimiques reliées électriquement les unes aux autres. Selon un exemple particulier de batterie, la pluralité de cellules électrochimiques est agencée sous la forme d'un ou plusieurs ensemble(s) de batterie, chaque ensemble de batterie comprenant plusieurs cellules électrochimiques raccordées électriquement les unes aux autres et assemblées mécaniquement les unes aux autres par un système d'assemblage, tel que des plaques d'assemblage. Une cellule électrochimique comprend, en particulier, un empilement d'électrodes positives reliées les unes aux autres et un empilement d'électrodes négatives reliées les unes aux autres, séparées par un séparateur, connu sous le terme de « stack ». Les électrodes positives reliées les unes aux autres forment une borne positive, et les électrodes négatives reliées les unes aux autres forment une borne négative.

Généralement, les ensembles sont agencés dans un boîtier les uns à côté des autres et sont reliés par des connecteurs électriques placés par exemple dans une couche située au centre de la batterie.

Cependant, une telle disposition des connecteurs réduit la densité énergétique de la batterie, notamment en raison de l'ajout de cette couche supplémentaire au centre de la batterie, dont généralement une partie significative du volume reste vide.

Il est par ailleurs connu de disposer les connecteurs le long des extrémités latérales des ensembles, mais cela présente l'inconvénient de les exposer en cas de choc latéral sur le véhicule, avec un risque de court-circuit.

Un des buts de l'invention est de pallier ces inconvénients et de proposer une batterie compacte avec une bonne densité énergétique, sans augmenter le risque de court-circuit en cas d'impact latéral.

A cet effet, l'invention a pour objet une batterie comprenant :
- un boîtier définissant un logement, le boitier définissant un premier bord latéral et un deuxième bord latéral opposés l'un à l'autre selon une direction transversale,
- une pluralité d'ensembles agencés dans le logement et s'étendant successivement dans la direction longitudinale perpendiculaire à la direction transversale, chacun des ensembles comprenant une pluralité de cellules électrochimiques s'étendant successivement dans la direction transversale, chacun des ensembles définissant une première extrémité latérale et une deuxième extrémité latérale opposées l'une à l'autre selon la direction transversale,
- au moins un connecteur électrique s'étendant transversalement entre le premier bord latéral du boîtier et la première extrémité latérale d'au moins un des ensembles,
   la batterie comprenant en outre au moins un capot s'étendant selon la direction longitudinale et disposé transversalement entre le premier bord latéral du boîtier et les premières extrémités latérales des ensembles, le capot délimitant au moins partiellement un logement de protection s'étendant entre le capot et un fond du boîtier dans une troisième direction perpendiculaire à la direction longitudinale et la direction transversale, le connecteur électrique étant logé dans le logement de protection.

Selon des modes particuliers de réalisation, la batterie comprend l'une ou plusieurs des caractéristiques optionnelles suivantes, prise(s) isolément ou selon toutes les combinaisons techniquement possibles :
- le connecteur électrique est une barre d'interconnexion reliant électriquement les premières extrémités latérales de deux ensembles entre eux ;
- le capot présente une section perpendiculairement à la direction longitudinale en forme de « L », la section comprenant une première branche s'étendant selon la direction transversale et une deuxième branche perpendiculaire à la première branche et s'étendant selon la troisième direction ;
- la deuxième branche du capot s'étend contre le premier bord latéral du boîtier ;
- le logement de protection est délimité selon la troisième direction par la première branche du capot;
- la batterie comprend une traverse s'étendant selon la direction transversale, la traverse étant intercalée longitudinalement entre deux ensembles, la traverse comprenant une première extrémité latérale et une deuxième extrémité latérale opposées l'une à l'autre selon la direction transversale ;
- la batterie comprend une cornière fixée sur la première extrémité latérale de la traverse, le capot butant selon la troisième direction sur la cornière ;
- la cornière comprend une première partie s'étendant selon la direction transversale et une deuxième partie s'étendant selon la troisième direction et perpendiculaire à la première partie, la deuxième branche du capot butant selon la troisième direction sur la première partie de la cornière et la première branche du capot butant selon la direction transversale sur la deuxième partie de la cornière;
- la deuxième partie de la cornière est fixée sur la première extrémité latérale de la traverse;
- le premier bord latéral du boîtier comprend un rail longitudinal, la première partie de la cornière étant en contact-plan sur ledit rail longitudinal;
- la cornière comprend une troisième partie parallèle à la première partie, la première branche du capot butant selon la troisième direction sur la troisième partie de la cornière;
- la batterie comprend un deuxième capot s'étendant selon la direction longitudinale et disposé entre les deuxièmes extrémités latérales des ensembles et le deuxième bord latéral du boîtier.

L'invention a aussi pour objet un procédé d'assemblage d'une batterie telle que décrite précédemment comprenant au moins les étapes suivantes :
- une étape d'agencement des ensembles dans une direction longitudinale de montage pour obtenir un système agencé,
- une étape de fixation sur le boîtier des ensembles pour obtenir un système fixé,
- une étape de fixation du connecteur électrique transversalement entre le premier bord latéral du boîtier et la première extrémité latérale d'au moins un des ensembles, et
- une étape de fixation du capot, de sorte qu'il s'étende transversalement entre le premier bord latéral et les premières extrémités latérales des ensembles et délimite au moins partiellement le logement de protection, le connecteur électrique étant logé dans le logement de protection.

L'invention sera mieux comprise à la lecture de la description qui va suivre, donnée uniquement à titre d'exemple non limitatif, et faite en se référant aux dessins annexés, sur lesquels :
- la figure 1 est une vue schématique en perspective d'une batterie selon l'invention, comprenant une pluralité d'ensembles, et
- la figure 2 est une vue en coupe selon un plan de coupe YZ d'une première extrémité latérale de la batterie représentée sur la figure 1.

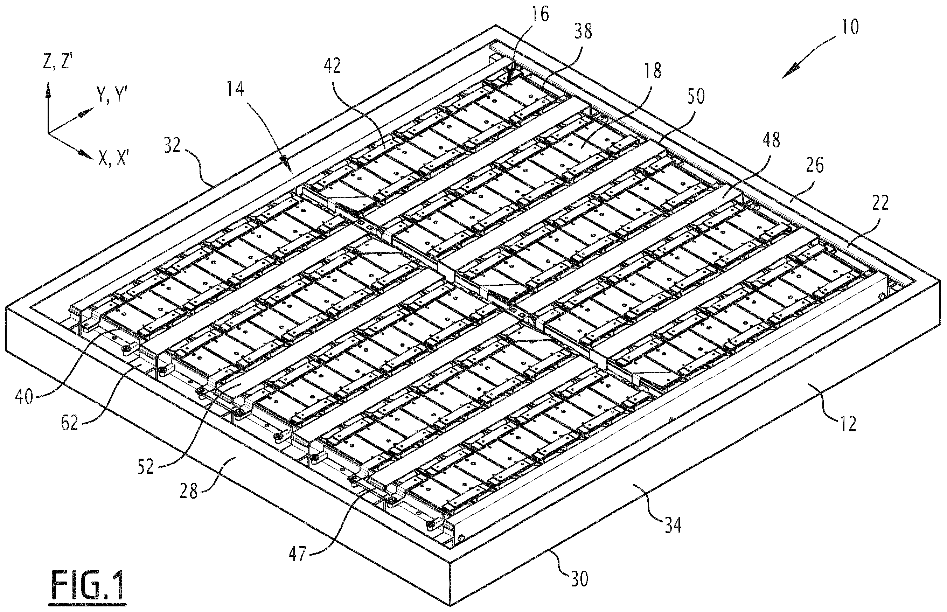

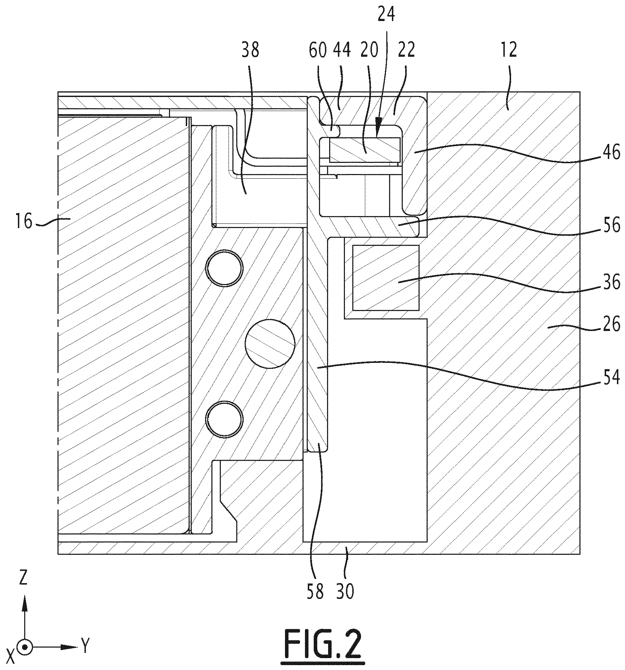

En référence aux figures 1 et 2, on décrit une batterie 10 selon l'invention.

La batterie 10, qui est représentée partiellement sur la figure 1, est par exemple destinée à prendre place dans un véhicule automobile électrique ou hybride (non représenté).

La batterie 10 comprend un boîtier 12 définissant un logement 14 s'étendant dans une direction longitudinale X qui est par exemple la direction d'avancée du véhicule, et dans une direction transversale Y perpendiculaire à la direction longitudinale et qui est par exemple la direction transversale du véhicule.

On définit en outre une troisième direction Z perpendiculaire à la direction longitudinale X et à la direction transversale Y, et qui est par exemple destinée à être sensiblement verticale lorsque le véhicule se situe sur une surface horizontale (non représentée).

La batterie 10 comprend, en outre, une pluralité d'ensembles 16 agencés dans le logement 14 et s'étendant successivement dans la direction longitudinale X, chacun des ensembles 16 comporte des cellules électrochimiques 18 s'étendant successivement dans la direction transversale Y et solidarisées entre elles.

La batterie 10 comprend aussi au moins un connecteur électrique 20 et un capot 22 délimitant au moins partiellement un logement de protection 24, le connecteur électrique 20 étant logé dans le logement de protection 24.

Le batterie 10 comprend avantageusement au moins un deuxième connecteur électrique 47 et un deuxième capot (non-illustré).

De préférence, la batterie 10 comprend en outre au moins une traverse 48 s'étendant dans la direction transversale Y, la traverse 48 comprenant une première extrémité latérale 50 et une deuxième extrémité latérale 52 opposées l'une à l'autre selon la direction transversale Y.

Dans l'exemple illustré sur la figure 1, la batterie 10 comprend cinq ensembles 16 et six traverses 48. Quatre des six traverses 48 sont intercalées longitudinalement entre les ensembles 16, et deux traverses 48 sont dites « extrémales » longitudinalement car elles ne longent respectivement qu'un seul des ensembles 16.

Selon d'autres modes de réalisation non représentés, le nombre d'ensembles 16 est de moins de cinq ou de plus de cinq, et le nombre de traverses 48 est de moins de six ou de plus de six.

La batterie 10 comprend en outre au moins une cornière 54 fixée sur la première extrémité latérale 50 de la traverse 48 et sur le boîtier 12.

De préférence, la batterie 10 comprend en outre au moins une deuxième cornière 62 fixée sur la deuxième extrémité latérale 52 de la traverse 48 et sur le boîtier 12.

La batterie 10 comprend aussi des organes de fixation (non représentés), tels que des vis, pour fixer les ensembles 16 sur le boîtier 12.

Le boîtier 12 présente par exemple une forme parallélépipédique, avantageusement aplatie dans la troisième direction Z, car la batterie 10 est par exemple destinée à être intégrée en partie inférieure du véhicule, par exemple sous un habitacle.

Le boîtier 12 définit un premier bord latéral 26 et un deuxième bord latéral 28 opposées l'un à l'autre selon la direction transversale Y. Le boîtier comprend en outre un fond 30, et un troisième bord latéral 32 et un quatrième bord latéral 34 opposés l'un à l'autre dans la direction longitudinale X.

Le premier bord latéral 26 du boîtier 12 comprend avantageusement un rail longitudinal 36 s'étendant en saillie transversalement en direction du deuxième bord latéral 28.

Chacun des ensembles 16 définit une première extrémité latérale 38 et une deuxième extrémité 40 latérale opposées l'une à l'autre selon la direction transversale Y.

Comme illustré sur la figure 2, la premières extrémité latérale 38 de chacun des ensembles 16 est à distance du premier bord latéral 26 du boîtier 12.

Avantageusement, chacun des ensembles 16 comprend également des connecteurs électriques 42 pour connecter les cellules 18 entre elles.

La traverse 48 s'étend par exemple dans la direction transversale Y entre le premier bord latéral 26 et le deuxième bord latéral 28 du boîtier 12.

De préférence, la traverse 48 est intercalée longitudinalement entre deux ensembles 16.

Dans l'exemple illustré sur la figure 1, les traverses 48 et les ensembles 16 sont avantageusement disposés successivement dans le logement 14 les uns contre les autres dans la direction longitudinale X et de manière alternée, les ensembles 16 et les traverses 48 étant fixés sur le boîtier 12.

En variante (non-illustrée), les traverses 48 et les ensembles 16 sont disposés dans la direction longitudinale X avec un jeu mécanique entre les traverses 48 et les ensembles 16.

La cornière 54 comprend de préférence une première partie 56 s'étendant selon la direction transversale Y et une deuxième partie 58 s'étendant selon la troisième direction Z et perpendiculaire à la première partie 56.

Avantageusement, la cornière 54 comprend en outre une troisième partie 60 parallèle à la première partie 56.

La cornière 54 est adaptée pour transmettre des efforts transversaux entre la traverse 48 et le boîtier 12.

En particulier, la deuxième partie 58 de la cornière 54 est fixée sur la première extrémité latérale 50 de la traverse 48, par exemple par soudage ou par collage.

En outre, la première partie 56 de la cornière 54 est par exemple en contact-plan sur le rail longitudinal 36, et plus particulièrement est par exemple fixée par une vis à celui-ci.

Le connecteur électrique 20 s'étend transversalement entre le premier bord latéral 26 du boîtier 12 et la première extrémité latérale 38 d'au moins un des ensembles 16.

En particulier, le connecteur électrique 20 est agencé du côté du rail longitudinal 36 opposé au fond 30 du boîtier 12 selon la troisième direction Z.

Le connecteur électrique 20 est par exemple disposé entre deux ensembles 16 pour les connecter électriquement entre eux.

Plus particulièrement, le connecteur électrique 20 est une barre d'interconnexion (ou barre du bus ou encore « busbar » selon la terminologie anglaise), par exemple en cuivre ou en aluminium, reliant électriquement les premières extrémités latérales 38 de deux ensembles 16 entre eux.

Le capot 22 s'étend selon la direction longitudinale X et est disposé transversalement entre le premier bord latéral 26 et les premières extrémités latérales 38 des ensembles 16.

Selon l'invention, le capot 22 est adapté pour transmettre des efforts transversaux entre les ensembles 16 et le boîtier 12, de sorte que le logement de protection 24 soit moins sensible à la déformation en cas de choc latéral sur le véhicule.

Avantageusement, le capot 22 bute selon la troisième direction Z sur la cornière 54.

La capot 22 présente de préférence une section perpendiculairement à la direction longitudinale en forme de « L », la section comprenant une première branche 44 s'étendant selon la direction transversale Y et une deuxième branche 46 perpendiculaire à la première branche 44 et s'étendant selon la troisième direction Z.

Comme illustré sur la figure 2, la deuxième branche 46 du capot 22 s'étend de préférence contre le premier bord latéral 26 du boîtier 12.

Plus particulièrement, la deuxième branche 46 du capot 22 bute selon la troisième direction Z sur la première partie 56 de la cornière 54.

Avantageusement, la première branche 44 du capot 22 bute selon la direction transversale Y sur la deuxième partie 58 de la cornière 54.

Par ailleurs, la première branche 44 du capot 22 bute avantageusement selon la troisième direction Z sur la troisième partie 60 de la cornière 54, ce qui permet un bon maintien en position du capot 22.

Comme illustré sur la figure 2, le logement de protection 24 s'étend dans la troisième direction Z entre le capot 22 et le fond 30 du boîtier 12.

Le logement de protection 24 est avantageusement délimité selon la troisième direction Z par la première branche 44 du capot 22.

Plus particulièrement, le logement de protection 24 s'étend selon la troisième direction Z entre la première branche 44 du capot 22 et le rail longitudinal 36.

Comme illustré sur la figure 2, le logement de protection 24 est de préférence délimité selon la troisième direction Z entre la première branche 44 du capot 22 et la première partie 56 de la cornière 54.

Le deuxième connecteur électrique 47 s'étend avantageusement transversalement entre le deuxième bord latéral 28 du boîtier 12 et la deuxième extrémité latérale 40 d'au moins un des ensembles 16.

Le deuxième capot (non-illustré) s'étend selon la direction longitudinale X et disposé entre les deuxièmes extrémités latérales 40 des ensembles 16 et le deuxième bord latéral 28 du boîtier 12.

Le deuxième capot est sensiblement identique au capot 22 décrit ci-dessus et délimite également partiellement un logement de protection pour le deuxième connecteur électrique 47.

Avantageusement, le deuxième capot bute selon la troisième direction Z sur la deuxième cornière 62.

Un procédé d'assemblage de la batterie 10 selon l'invention va maintenant être décrit.

Le procédé comprend une étape d'agencement des ensembles 16 dans une direction longitudinale de montage X' pour obtenir un système agencé, et une étape de fixation sur le boîtier 12 des ensembles 16 pour obtenir un système fixé.

Dans le système agencé, les cellules électrochimiques 18 de chacun des ensembles 16 s'étendent successivement dans la direction transversale de montage Y'.

Le système fixé est situé dans le logement 14 et orienté par rapport au boîtier 12 de sorte que la direction de serrage X' soit parallèle à la direction longitudinale X définie par la batterie 10 à l'état assemblé, et que la direction transversale de montage Y' soit parallèle à la direction transversale Y définie par la batterie 10 à l'état assemblé.

De préférence, le procédé comprend une étape supplémentaire d'agencement d'au moins une traverse 48 et une étape de serrage de la ou des traverses 48 et des ensembles 16 les uns contre les autres dans la direction longitudinale de montage X'.

Chaque cornière 54 est fixée, par exemple par soudage, sur la première extrémité latérale 50 de la traverse 48 correspondante.

Dans le procédé, l'agencement des ensembles 16 est avantageusement réalisé dans le logement 14. La direction longitudinale de montage X' est parallèle à la direction longitudinale X, et la direction la direction transversale de montage Y' est parallèle à la direction transversale Y dès l'étape d'agencement.

La ou les cornière(s) 54 est (sont) par exemple vissée(s) sur le premier bord latéral 26 du boîtier 12, et plus particulièrement vissée(s) sur le rail longitudinal 36. Ainsi, la ou les traverse(s) 48 sont avantageusement fixée(s) par l'intermédiaire de la ou des cornière(s) 54.

Le procédé comprend ensuite une étape de fixation du connecteur électrique 20, comme par exemple une barre de connexion, transversalement entre le premier bord latéral 26 du boîtier 12 et la première extrémité latérale 38 d'au moins un des ensembles 16.

Le procédé comprend une étape de fixation du capot 22, de sorte qu'il s'étende transversalement entre le premier bord latéral 26 et les premières extrémités latérales 38 des ensembles 16 et délimite au moins partiellement le logement de protection 24.

De préférence, le capot 22 est posé sur la ou les cornières 54 et est ensuite avantageusement fixé sur le boitier 12, par des vis par exemple.

Grâce aux caractéristiques décrites ci-dessus, la batterie 10 selon l'invention est une batterie compacte avec une bonne densité énergétique, tout en diminuant le risque de court-circuit en cas d'impact latéral.

En effet, le logement de protection 24 délimité partiellement par le capot 22 permet de faire passer certains des connecteurs électriques non pas au centre de la batterie, mais à côté, avec une perte de volume de stockage d'énergie beaucoup plus faible.

Les connecteurs électriques 20 ainsi positionnés sont protégés dans le logement de protection 24 qui est moins sensible à la déformation grâce à la reprise des efforts transversaux par le capot 22 et éventuellement la ou les cornières 54.

L'invention n'est pas limitée aux exemples de réalisation et aux variantes décrits auparavant et illustrés sur les dessins.

Par exemple, selon une variante de l'invention, la batterie 10 comprend une pluralité de capots 22 s'étendant les uns à côté des autres selon la direction longitudinale X, et non un unique capot 22 s'étendant sur toute la longueur du boitier 12 selon la direction longitudinale X.

## Revendications

1. Batterie (10) comprenant :
- un boîtier (12) définissant un logement (14), le boitier (12) définissant un premier bord latéral (26) et un deuxième bord latéral (28) opposés l'un à l'autre selon une direction transversale (Y),
- une pluralité d'ensembles (16) agencés dans le logement (14) et s'étendant successivement dans la direction longitudinale (X) perpendiculaire à la direction transversale (Y), chacun des ensembles (16) comprenant une pluralité de cellules électrochimiques (18) s'étendant successivement dans la direction transversale (Y), chacun des ensembles (16) définissant une première extrémité latérale (38) et une deuxième extrémité latérale (40) opposées l'une à l'autre selon la direction transversale (Y),
- au moins un connecteur électrique (20) s'étendant transversalement entre le premier bord latéral (26) du boîtier (12) et la première extrémité latérale (38) d'au moins un des ensembles (16),
**caractérisée en ce que** la batterie (10) comprend en outre au moins un capot (22) s'étendant selon la direction longitudinale (X) et disposé transversalement entre le premier bord latéral (26) du boîtier (12) et les premières extrémités latérales (38) des ensembles (16),
le capot (22) délimitant au moins partiellement un logement de protection (24) s'étendant entre le capot (22) et un fond (30) du boîtier (12) dans une troisième direction (Z) perpendiculaire à la direction longitudinale (X) et la direction transversale (Y), le connecteur électrique(20) étant logé dans le logement de protection (24).

2. Batterie (10) selon la revendication 1, dans laquelle le connecteur électrique (20) est une barre d'interconnexion reliant électriquement les premières extrémités latérales (38) de deux ensembles (16) entre eux.

3. Batterie (10) selon la revendication 1 ou 2, dans laquelle le capot (22) présente une section perpendiculairement à la direction longitudinale (X) en forme de « L », la section comprenant une première branche (44) s'étendant selon la direction transversale (Y) et une deuxième branche (46) perpendiculaire à la première branche (44) et s'étendant selon la troisième direction (Z).

4. Batterie (10) selon la revendication 3, dans laquelle la deuxième branche (46) du capot (22) s'étend contre le premier bord latéral (26) du boîtier (12).

5. Batterie (10) selon la revendication 3 ou 4, dans laquelle le logement de protection (24) est délimité selon la troisième direction (Z) par la première branche (44) du capot (22).

6. Batterie (10) selon l'une des revendications 3 à 5, comprenant au moins une traverse (48) s'étendant selon la direction transversale (Y), la traverse (48) étant intercalée longitudinalement entre deux ensembles (16), la traverse (48) comprenant une première extrémité latérale (50) et une deuxième extrémité latérale (52) opposées l'une à l'autre selon la direction transversale (Y).

7. Batterie (10) selon la revendication 6, comprenant au moins une cornière (54) fixée sur la première extrémité latérale (50) de la traverse (48), le capot (22) butant selon la troisième direction (Z) sur la cornière (54).

8. Batterie (10) selon la revendication 7, dans laquelle la cornière (54) comprend une première partie (56) s'étendant selon la direction transversale (Y) et une deuxième partie (58) s'étendant selon la troisième direction (Z) et perpendiculaire à la première partie (56), la deuxième branche (46) du capot (22) butant selon la troisième direction (Z) sur la première partie (56) de la cornière (54) et la première branche (44) du capot (22) butant selon la direction transversale (Y) sur la deuxième partie (58) de la cornière (54).

9. Batterie (10) selon la revendication 8, dans laquelle la deuxième partie (58) de la cornière (54) est fixée sur la première extrémité latérale (50) de la traverse (48).

10. Batterie (10) selon la revendication 8 ou 9, dans laquelle le premier bord latéral (26) du boîtier (12) comprend un rail longitudinal (36), la première partie (56) de la cornière (54) étant en contact-plan sur ledit rail longitudinal (36).

11. Batterie (10) selon l'une des revendications 8 à 10, dans laquelle la cornière (54) comprend une troisième partie (60) parallèle à la première partie (56), la première branche (44) du capot (22) butant selon la troisième direction (Z) sur la troisième partie (60) de la cornière (54).

12. Batterie (10) selon l'une quelconque des revendications précédentes, comprenant un deuxième capot s'étendant selon la direction longitudinale (X) et disposé entre les deuxièmes extrémités latérales (40) des ensembles (16) et le deuxième bord latéral (28) du boîtier (12).

13. Procédé d'assemblage d'une batterie (10) selon l'une quelconque des revendications précédentes, comprenant :
- une étape d'agencement des ensembles (16) dans une direction longitudinale de montage X' pour obtenir un système agencé,
- une étape de fixation sur le boîtier (12) des ensembles (16) pour obtenir un système fixé,
- une étape de fixation du connecteur électrique (20) transversalement entre le premier bord latéral (26) du boîtier (12) et la première extrémité latérale (38) d'au moins un des ensembles (16), et
- une étape de fixation du capot (22), de sorte qu'il s'étende transversalement entre le premier bord latéral (26) et les premières extrémités latérales (38) des ensembles (16) et délimite au moins partiellement le logement de protection (24), le connecteur électrique (20) étant logé dans le logement de protection (24).
